(19) **Europäisches Patentamt / European Patent Office / Office européen des brevets**

(11) **EP 3 789 413 B1**

(12) **EUROPEAN PATENT SPECIFICATION**

(45) Date of publication and mention of the grant of the patent:
**04.05.2022 Bulletin 2022/18**

(21) Application number: **19796959.5**

(22) Date of filing: **16.04.2019**

(51) International Patent Classification (IPC):
**C08F 236/18** (2006.01)    **C08F 2/00** (2006.01)
**C09J 109/04** (2006.01)    **C09J 111/02** (2006.01)
**C08F 220/42** (2006.01)    **C08F 220/44** (2006.01)
**D06N 3/10** (2006.01)

(52) Cooperative Patent Classification (CPC):
(C-Sets available)
**C08F 220/44; C08F 2/00; C08F 236/18;**
**C09J 109/04; C09J 111/02; D06N 3/10;**
D06M 2200/11; D06N 2205/023; D06N 2209/103;
D06N 2209/145      (Cont.)

(86) International application number:
**PCT/JP2019/016242**

(87) International publication number:
**WO 2019/211975 (07.11.2019 Gazette 2019/45)**

(54) **STATISTICAL COPOLYMER LATEX AND USE THEREOF, AND PRODUCTION METHOD FOR STATISTICAL COPOLYMER LATEX**

STATISTISCHER COPOLYMERLATEX UND SEINE VERWENDUNG UND HERSTELLUNGSVERFAHREN FÜR STATISTISCHEN COPOLYMERLATEX

LATEX DE COPOLYMÈRE STATISTIQUE ET UTILISATION CORRESPONDANTE ET PROCÉDÉ DE PRODUCTION POUR LATEX DE COPOLYMÈRE STATISTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.05.2018 JP 2018088898**

(43) Date of publication of application:
**10.03.2021 Bulletin 2021/10**

(73) Proprietor: **Denka Company Limited**
**Tokyo 103-8338 (JP)**

(72) Inventors:
• **ONOZUKA, Masao**
  **Itoigawa-city, Niigata 949-0393 (JP)**
• **NISHINO, Wataru**
  **Itoigawa-city, Niigata 949-0393 (JP)**
• **ONUKI, Suguru**
  **Itoigawa-city, Niigata 949-0393 (JP)**
• **YAMAGISHI, Uichiro**
  **Itoigawa-city, Niigata 949-0393 (JP)**
• **HAGIWARA, Shogo**
  **Itoigawa-city, Niigata 949-0393 (JP)**

(74) Representative: **Hoffmann Eitle**
**Patent- und Rechtsanwälte PartmbB**
**Arabellastraße 30**
**81925 München (DE)**

(56) References cited:
EP-A1- 0 223 149     GB-A- 858 444
JP-A- S5 599 907     JP-A- H09 505 842
JP-A- 2001 011 201     JP-A- 2006 271 423
JP-A- 2014 181 336     JP-B1- S4 722 094
US-A- 2 395 649     US-A- 2 395 649
US-A- 3 340 088     US-A- 3 595 847

(52) Cooperative Patent Classification (CPC): (Cont.)

C-Sets
**C08F 220/44;
C08F 236/18**

## Description

## Technical Field

The present invention relates to a statistical copolymer latex and use thereof, and a production method for a statistical copolymer latex.

## Backgro und Art

A chloroprene polymer latex is structurally similar to a natural rubber latex, and thus, has similar physical properties (elongation crystallinity or high flexibility). In addition, it has heat resistance, weather resistance, ozone resistance, oil resistance, solvent resistance, flame resistance, and the like, which are higher than those of the natural rubber latex, by a chlorine group of a butadiene skeleton, and has properties for withstanding severer use conditions.

On the other hand, such properties that are currently required have been complicated by high functionalization or compactification of a product, a response to environmental regulation, and the like, and higher performance has been required. For example, fuel oil resistance, alcohol-added gasoline resistance, sour gasoline resistance, alcohol resistance, or the like is required as the use of a fiber treatment (an RFL adhesive agent), in addition to heat resistance and engine oil resistance.

For example, in Patent Literature 1, a production method for a chloroprene copolymer in which 2-chloro-1,3-butadiene and an unsaturated nitrile are subjected to emulsion polymerization in the presence of a xanthogen disulfide compound is disclosed as a method for improving oil resistance of chloroprene rubber. In addition, in Patent Literature 2, a production method for a copolymer in which chloroprene and acrylonitrile or methacrylonitrile are subjected to copolymerization in the presence of a metal halide and under the irradiation of an ultraviolet ray is disclosed.

For example, in Patent Literatures 3 and 4, a copolymer latex having an unsaturated nitrile copolymerization amount of 20% to 80% and 30% to 80% of a moderate toluene-insoluble fraction is reported as a latex of which solvent resistance is improved.

## Citation List

## Patent Literature

Patent Literature 1: Japanese Unexamined Patent Publication No. S55-145715
Patent Literature 2: Japanese Unexamined Patent Publication No. S48-981
Patent Literature 3: Japanese Unexamined Patent Publication No. 2009-179687
Patent Literature 4: Japanese Unexamined Patent Publication No. 2009-235304

US 2,395,649 relates to rubber-like, polymeric materials obtained by polymerizing mixtures of chloroprene and acrylic nitrile, wherein a chloroprene monomer is added to a polymerization mass in a plurality of decreasing amounts. US 3,340,088 relates to a chloroprene-acrylonitrile copolymer primer for pressure-sensitive adhesive tape. GB 858444 relates to a process for the production of copolymers of 2-chloro-buta-1,3-diene and acrylonitrile. US 3,595,847 relates to a process for the production of sulphur-modified polychloroprenes. EP 0 223 149 relates to heat resistant chloroprene copolymers.

## Summary of Invention

## Technical Problem

As described above, in Patent Literatures 1 and 2, the method for improving the oil resistance of the chloroprene rubber is proposed, but such technologies are a technology assuming dry rubber but not a technology for a latex product itself. In addition, it is considered that, the technologies of Patent Literatures 1 and 2 are a technology for improving oil resistance, and are a technology that is not suitable for fuel oil resistance, alcohol-added gasoline resistance, sour gasoline resistance, alcohol resistance, or the like.

In addition, in Patent Literatures 3 and 4, the latex of which the solvent resistance is improved is disclosed, but it is considered that, these are also the technology assuming the dry rubber but not the technology for the latex product itself, both of these are focused on the improvement of physical properties of vulcanized rubber, and are a technology that is not suitable for performance (fuel oil resistance, alcohol-added gasoline resistance, sour gasoline resistance, alcohol resistance, engine oil resistance, or the like) as the latex product itself or as the use other than a vulcanized molded product (a film or an RFL film).

Therefore, a main object of the present invention is to provide a technology for improving alcohol-added gasoline resistance and engine oil resistance of a statistical copolymer obtained by drying a statistical copolymer latex.

**Solution to Problem**

That is, in the present invention, first, a statistical copolymer latex, including: a chloroprene monomeric unit and an unsaturated nitrile monomeric unit in which the unsaturated nitrile monomeric unit is 5 mass% to 20 mass%, in which a toluene-insoluble fraction of a statistical copolymer obtained by lyophilization of the statistical copolymer latex is 50 mass% to 100 mass%, and is preferably 75 mass% to 95 mass%, with respect to 100 mass% of the statistical copolymer, is provided.

In the statistical copolymer latex of the present invention, a value of a volume change rate ($\Delta V$) and a value of a weight change rate ($\Delta W$) that are measured on the basis of JIS K6258 after dipping a statistical copolymer obtained by drying the statistical copolymer latex at a room temperature in alcohol-added gasoline (a solution of Isooctane/Toluene/Ethanol = 4/4/2) at 23°C for 72 hours can be in a range of -10% to +60%, and can be preferably in a range of 0% to +50%.

In addition, in the statistical copolymer latex of the present invention, a value of a volume change rate ($\Delta V$) and a value of a weight change rate ($\Delta W$) that are measured on the basis of JIS K6258 after dipping an RFL film obtained by drying an RFL adhesive agent of Resorcine (R)/Formalin (F)/Latex (L) = 10/5/85 (a mass ratio) using the statistical copolymer latex at a room temperature in alcohol-added gasoline (a solution of Isooctane/Toluene/Ethanol = 4/4/2) at 23°C for 72 hours can be in a range of -10% to +20%, and can be preferably in a range of -5% to +10%.

Further, in the statistical copolymer latex of the present invention, a value of a volume change rate ($\Delta V$) and a value of a weight change rate ($\Delta W$) that are measured on the basis of JIS K6258 after dipping a statistical copolymer obtained by drying the statistical copolymer latex at a room temperature in engine oil at 140°C for 72 hours can be in a range of -10% to +10%, and can be preferably in a range of -5% to +5%.

In addition, in the statistical copolymer latex of the present invention, a value of a volume change rate ($\Delta V$) and a value of a weight change rate ($\Delta W$) that are measured on the basis of JIS K6258 after dipping an RFL film obtained by drying an RFL adhesive agent of Resorcine (R)/Formalin (F)/Latex (L) = 10/5/85 (a mass ratio) using the statistical copolymer latex at a room temperature in engine oil at 140°C for 72 hours can be in a range of -10% to +10%, and can be preferably in a range of -3% to +5%.

In the statistical copolymer latex of the present invention, a concentration of ammonia contained in the statistical copolymer latex can be less than or equal to 20 ppm, and pH can be in a range of 6.0 to 11.5.

The statistical copolymer latex of the present invention can be used in an RFL adhesive agent, a dipped product, an adhesive agent, or a film.

Next, in the present invention, a production method for obtaining the statistical copolymer latex, the method including:
a polymerization step of performing emulsion polymerization until a polymerization rate is 60% to 100% at a polymerization temperature of 30°C to 45°C, by using 95 parts by mass to 45 parts by mass of chloroprene monomer and 5 parts by mass to 55 parts by mass of an unsaturated nitrile monomer (here, a total of the chloroprene monomer and the unsaturated nitrile monomer is set to 100 parts by mass), and 0.0 parts by mass to 0.4 parts by mass of alkyl xanthogen disulfide, as a total charged amount from initiation to termination of polymerization, is provided.

In the production method for the statistical copolymer latex of the present invention, in the polymerization step, the chloroprene monomer can be subjected to continuous addition or can be subjected to intermittent divided addition 10 times or more, after initiation of a polymerization reaction.

Further, in the present invention, a statistical copolymer latex, including: a chloroprene monomeric unit and an unsaturated nitrile monomeric unit in which the unsaturated nitrile monomeric unit is 5 mass% to 20 mass%,

in which a toluene-insoluble fraction of a statistical copolymer obtained by lyophilization of the statistical copolymer latex is 50 mass% to 100 mass% with respect to 100 mass% of the statistical copolymer, and
the statistical copolymer latex is obtained by a step of performing emulsion polymerization until a polymerization rate is 60% to 100% at a polymerization temperature of 30°C to 45°C, by using 95 parts by mass to 45 parts by mass of chloroprene monomer and 5 parts by mass to 55 parts by mass of an unsaturated nitrile monomer (here, a total of the chloroprene monomer and the unsaturated nitrile monomer is set to 100 parts by mass), and 0.0 parts by mass to 0.4 parts by mass of alkyl xanthogen disulfide, as a total charged amount from initiation to termination of polymerization, is provided.

Note that, in the present invention, "JIS" indicates Japanese Industrial Standards.

In addition, as described in J. C. Randall "POLYMER SEQUENCE DETERMINATION, Carbon-13 NMR Method" Academic Press, New York, 1977, Pages 71 to 78, the "statistical copolymer" in the present invention indicates a copolymer in which a monomer sequence distribution can be described by a Bernoulli's statistical model or by a primary or secondary Markov's statistical model. In addition, the statistical copolymer including the chloroprene monomeric unit and the unsaturated nitrile monomeric unit of the present embodiment is not particularly limited, and in a case where the statistical copolymer is configured of a binary monomer, in Mayo-Lewis Equation (I) described below, with respect to reactivity ratios $r_1$ and $r_2$ at the time of setting chloroprene monomer to M1, $r_1$ can be in a range of 0.3 to 3000, and $r_2$ can be in a range of $1 \times 10$-5 to 3.0. Further, from another viewpoint, the "statistical copolymer" in the present invention is a copolymer that can be obtained by radical polymerization of a plurality of types of monomers. This "statistical copolymer" is a concept substantially including a random copolymer.
[Equation 1]

$$\frac{d\,[\mathrm{M}\,1]}{d\,[\mathrm{M}\,2]} = \frac{[\mathrm{M}\,1]}{[\mathrm{M}\,2]} \times \frac{r_1\,[\mathrm{M}\,1] + [\mathrm{M}\,2]}{[\mathrm{M}\,1] + r_2\,[\mathrm{M}\,2]} \quad \cdot \quad \cdot \quad \cdot \quad (\mathrm{I})$$

**Advantageous Effects of Invention**

According to the present invention, it is possible to improve alcohol-added gasoline resistance and engine oil resistance of a statistical copolymer obtained by drying a statistical copolymer latex.

**Description of Embodiments**

Hereinafter, a mode for implementing the present invention will be described in detail. Note that, the present invention is not limited to the following embodiment.

<Statistical Copolymer Latex>

A statistical copolymer latex of the present embodiment is a statistical copolymer latex including a chloroprene monomeric unit and an unsaturated nitrile monomeric unit.
The content of an unsaturated nitrile of the statistical copolymer latex is 5 mass% to 20 mass%, and is preferably 6 mass% to 17 mass%. By setting to be in such a range, it is possible to improve oil resistance, and mechanical strength or low-temperature properties as rubber of a statistical copolymer obtained by drying the statistical copolymer latex. In a case where the content of an unsaturated nitrile is lower than this range, oil resistance is insufficient, in a case where the content of an unsaturated nitrile is higher than this range, mechanical strength as rubber decreases, or low-temperature properties may decrease. In order to adjust the content of an unsaturated nitrile, an added amount of an unsaturated nitrile monomer to be copolymerized with chloroprene monomer may be adjusted.
Examples of the statistical copolymer latex of the present embodiment include a chloroprene-acrylonitrile statistical copolymer latex, a chloroprene-methacrylonitrile statistical copolymer latex, chloroprene-ethacrylonitrile statistical copolymer latex, and a chloroprene-phenyl acrylonitrile statistical copolymer latex. Among them, a chloroprene-acrylonitrile statistical copolymer latex is preferable from the viewpoint of production easiness, heat resistance, oil resistance, and mechanical strength.
In the statistical copolymer latex of the present embodiment, a toluene-insoluble fraction of a statistical copolymer obtained by the lyophilization of the statistical copolymer latex is 50 mass% to 100 mass%, and is preferably 75 mass% to 95 mass%, with respect to 100 mass% of the statistical copolymer.
The toluene-insoluble fraction corresponds to a gel structure, and the statistical copolymer latex of the present embodiment has a high gel structure, and thus, solubility with respect to an organic solvent is decreased, a swell with respect to the organic solvent is hard to occur, and resistance with respect to a large number of organic solvents is improved In particular, it is also possible to considerably improve the resistance with respect to the organic solvent such as toluene, which originally easily dissolves chloroprene, and thus, it is possible to improve resistance with respect to fuel oil in which isooctane and toluene are at a ratio of approximately 5 : 5, and resistance with respect to alcohol-added gasoline in which isooctane, toluene, and ethanol are at a ratio of approximately 4 : 4 : 2.
In a technology of dry rubber of the related art, in a case where there are many gel structures, it is difficult to perform processing, and thus, it has been a common sense to prevent the development of the gel structure, but the present invention has succeeded in improving fuel oil resistance and alcohol-added gasoline resistance of the statistical copolymer obtained by drying the statistical copolymer latex, by changing the idea and by intentionally developing the gel structure. In a case where the toluene-insoluble fraction is less than 50 mass%, fuel oil resistance and alcohol-added gasoline resistance of the statistical copolymer to be obtained may be insufficient.

Specifically, in the statistical copolymer latex of the present embodiment, a value of a volume change rate ($\Delta$V) and a value of a weight change rate ($\Delta$W) that are measured on the basis of JIS K6258 after dipping a statistical copolymer obtained by drying the statistical copolymer latex at a room temperature in alcohol-added gasoline (a solution of Isooctane/Toluene/Ethanol = 4/4/2) at 23°C for 72 hours are in a range of -10% to +60%, and alcohol-added gasoline resistance is extremely high.

In addition, in the statistical copolymer latex of the present embodiment, a value of a volume change rate ($\Delta$V) and a value of a weight change rate ($\Delta$W) that are measured on the basis of JIS K6258 after dipping an RFL film obtained by drying an RFL adhesive agent of Resorcine (R)/Formalin (F)/Latex (L) = 10/5/85 (a mass ratio) using the statistical copolymer latex at a room temperature in alcohol-added gasoline (a solution of Isooctane/Toluene/Ethanol = 4/4/2) at 23°C for 72 hours are in a range of -10% to +20%, alcohol-added gasoline resistance in the case of being an RFL film is also extremely high.

Further, in the statistical copolymer latex of the present embodiment, a value of a volume change rate ($\Delta$V) and a value of a weight change rate ($\Delta$W) that are measured on the basis of JIS K6258 after dipping a statistical copolymer obtained by drying the statistical copolymer latex at a room temperature in engine oil at 140°C for 72 hours are in a range of -10% to +10%, and oil resistance in the case of being a film is also extremely high.

In addition, in the statistical copolymer latex of the present embodiment, a value of a volume change rate ($\Delta$V) and a value of a weight change rate ($\Delta$W) that are measured on the basis of JIS K6258 after dipping an RFL film obtained by drying an RFL adhesive agent of Resorcine (R)/Formalin (F)/Latex (L) = 5/10/85 (a mass ratio) using the statistical copolymer latex at a room temperature in engine oil at 140°C for 72 hours are in a range of -10% to +10%, and oil resistance in the case of being an RFL film is also extremely high.

It is preferable that the statistical copolymer latex of the present embodiment has the concentration of contained ammonia of less than or equal to 20 ppm, and has pH of a range of 6.0 to 11.5. By setting the pH to be greater than or equal to 6.0, it is possible to prevent a decrease in latex stability. In addition, by setting the pH to be less than or equal to 11.5, it is possible to set the concentration of ammonia to be less than or equal to 20 ppm and prevent an odor from being generated from the latex, and thus, an influence on the environment or the human body can be decreased.

<Use of Statistical Copolymer Latex>

The statistical copolymer latex of the present embodiment can be preferably used in an RFL adhesive agent, a dipped product, an adhesive agent, or a film by using high fuel oil resistance, high alcohol-added gasoline resistance, and the like thereof. In addition, the statistical copolymer latex of the present embodiment is formed into the statistical copolymer by adjusting the pH and through a step such as freezing coagulation, water washing, and hot air drying of a ordinary method, and the obtained statistical copolymer can be preferably used as the material of a rubber product that is used in a driving belt or a conveyer belt, an air spring, a seal, packing, a vibration-proof material, a hose, a rubber roll, a wiper, a boot, a rubber-coated cloth, a sponge product, or a rubber lining.

(RFL Adhesive Agent and Adhesive Agent)

A chloroprene polymer latex is used as an RFL adhesive agent for performing a surface treatment by dipping a reinforcing fiber in order to increase adhesiveness with rubber. In the use of a belt for which the reinforcing fiber is used, particularly excellent durability is required in addition to the adhesiveness, and a demand with respect to mechanical strength, oil resistance, or heat resistance is high. In the use of a belt for an automobile, an RFL adhesive material having resistance with respect to alcohol-added gasoline that has been rapidly widespread recently as fuel having a small environmental load has been desired in addition to the fuel oil resistance. In addition, the chloroprene polymer latex has a characteristic of having contact properties and excellent initial adhesion strength, and thus, is used as an adhesive agent of a wide range of materials such as civil engineering and construction, a plywood board, furniture, shoes, a wet suit, and an interior material of an automobile. Among them, CR is excellent in initial adhesion strength and heat-resistant adhesion strength, and thus, a demand as one-component adhesive agent for polyurethane foam that is used widely as the material of the furniture or the interior material of the automobile has considerably expanded. In the interior of the automobile, high sensuousness is required, but oil resistance of CR is insufficient, and thus, in a case where an airborne droplet of various oils and fuels used in the automobile is attached to an adherend, peeling may occur on the interface, or the surface of the adherend may be curved. For this reason, an adhesive material having high oil resistance, high fuel oil resistance, or high alcohol-added gasoline resistance has been desired.

The statistical copolymer latex of the present embodiment is capable of increasing fuel oil resistance and alcohol-added gasoline resistance of an adhesive agent. Accordingly, it is possible to produce an adhesive agent that is more excellent than CR of the related art.

(DippedProduct)

A rubber latex containing natural rubber, or synthetic rubber such as chloroprene rubber, isoprene rubber, or nitrile butadiene rubber is used as a raw material of a dipped molded product such as medical surgical gloves, inspection gloves, industrial gloves, a balloon, a catheter, a rubber boot, and a reinforcing fiber. In particular, in order to avoid the problem of a shock symptom (anaphylaxis) due to the allergy of natural rubber, synthetic rubber such as chloroprene rubber, isoprene rubber, and nitrile butadiene rubber is preferable as a rubber latex for the medical surgical gloves, the inspection gloves, the industrial gloves, and the household gloves. Among them, chloroprene rubber gloves are excellent in the balance of flexibility or mechanical strength and have high chemical resistance, and thus, are adopted as the use of industrial gloves having resistance to various chemicals. In the industrial gloves used in an operation relevant to an automobile, as described above, a demand with respect to high oil resistance, high fuel oil resistance, or high alcohol-added gasoline resistance is high and the development of a chloroprene polymer latex having more excellent oil resistance, excellent fuel oil resistance, or excellent alcohol-added gasoline resistance is desired.

The statistical copolymer latex of the present embodiment is capable of increasing fuel oil resistance and alcohol-added gasoline resistance of the dipped product. Accordingly, it is possible to produce gloves more excellent than those of a chloroprene polymer latex of the related art.

(Driving Belt and Conveyer Belt)

Specific examples of a driving belt and a conveyer belt include a flat belt, a conveyer belt, a timing belt, a V belt, a rib belt, and a round belt. The statistical copolymer of the present embodiment is capable of increasing mechanical strength, oil resistance, flex fatigue resistance, fuel oil resistance, and alcohol-added gasoline resistance of the driving belt and the conveyer belt. Accordingly, it is possible to produce a belt capable of withstanding the use in an environment exposed to scattered oil, which was difficult with the material of the related art.

(Air Spring)

An air spring is a spring device using elasticity of compressed air, and is used in an air suspension or the like of an automobile, a bus, a truck, or the like. The statistical copolymer of the present embodiment is capable of increasing mechanical strength, oil resistance, durability fatigue, settling resistance (low permanent compression set property), fuel oil resistance, and alcohol-added gasoline resistance of the air spring. Accordingly, it is possible to produce an air spring capable of withstanding the use in an environment in which there are a lot of oil stains, which was difficult with the material of the related art.

(Seal and Packing)

A seal is a part preventing the leakage of liquid or gas, and the infiltration of rain water, dust such as dirt, or impurities into the inside, in a machine or a device, and examples thereof include a gasket to be used for fixing use and a packing to be used in a motion portion/movable portion. In the gasket in which a seal portion is fixed by a bolt or the like, various materials are used according to the purpose in a soft gasket such as an O ring or a rubber sheet. In addition, the packing is used in a shaft of a pump or a motor, a rotation portion such as a movable portion of a valve, a reciprocation portion such as a piston, a connection portion of a coupler, a water stopping portion of a water faucet, or the like. The statistical copolymer of the present embodiment is capable of increasing mechanical strength, oil resistance, fuel oil resistance, and alcohol-added gasoline resistance of the seal. Accordingly, it is possible to produce a seal used in non-polar fluid such as engine oil or gear oil, fuel oil, or alcohol-added gasoline, which was difficult with the material of the related art. In the statistical copolymer of the present embodiment, excellent settling resistance (low permanent compression set property) can also be obtained in addition to the properties described above, and thus, it is difficult to change the shape of the seal even in the case of being used for a long period of time, and excellent seal performance can be obtained In particular, settling resistance (low permanent compression set property) at a low temperature is important in this use.

(Vibration-Proof Material)

A vibration-proof material is a rubber preventing the transmission and propagation of a vibration, and specific examples thereof include a torsional damper, an engine mount, and a muffler hanger for preventing a noise by absorbing a vibration at the time of driving an engine of an automobile or various vehicles. The statistical copolymer of the present embodiment is capable of increasing mechanical strength, oil resistance, flex fatigue resistance, fuel oil resistance, and alcohol-added gasoline resistance of the vibration-proof material. Accordingly, it is possible to produce a vibration-proofing rubber capable of withstanding the use in an environment in which oil is scattered, which was difficult with the material of the related art.

(Hose)

A hose is a pipe that can be bent, and specific examples thereof include a hose for water conveyance, a hose for oil conveyance, a hose for air conveyance, a hose for vapor, and a high/low-pressure hydraulic hose. The statistical copolymer of the present embodiment is capable of increasing mechanical strength, oil resistance, settling resistance (low permanent compression set property), fuel oil resistance, and alcohol-added gasoline resistance of the hose. Accordingly, it is possible to produce a hose that is in directly in contact with non-polar fluid, which was difficult with the material of the related art.

(Rubber Roll)

A rubber roll is a roll to be produced by adhesively covering a metal core such as an iron core with rubber, and specific examples thereof include a rubber roll according to demand characteristics of various uses such as paper production, a various-metal production, printing, a general industry, agricultural machinery such as a rice huller, or food processing. An industrial material for the iron production and the paper production or the production of a product is used in an environment in which oil is attached, and may be exposed to an acid or an alkali when the product is subjected to a plating treatment with gold, silver, nickel, chromium, zinc, or the like. The statistical copolymer of the present embodiment is capable of increasing mechanical strength, oil resistance, settling resistance (low permanent compression set property), fuel oil resistance, and alcohol-added gasoline resistance of the rubber roll. Accordingly, it is possible to produce a rubber roll capable of withstanding the use in an environment in which oil is attached, which was difficult in CR of the related art.

(Wiper)

A wiper is specifically used in a front window, a rear window, or the like of an automobile, an electric train, an aircraft, a ship, a construction machine, or the like. The statistical copolymer of the present embodiment is capable of increasing mechanical strength, oil resistance, durability fatigue, settling resistance (low permanent compression set property), fuel oil resistance, and alcohol-added gasoline resistance of the wiper. Accordingly, it is possible to produce a wiper capable of withstanding the use in an environment in which there are a lot of oil stains, which was difficult with the material of the related art.

(Boot)

A Boot is a member in the shape of bellows in which an outer diameter gradually increases from one end toward the other end, and specifically, is a constant-velocity joint cover boot, a ball joint cover boot (a dust cover boot), a rack and pinion boot, and the like for protecting a driving portion of a driving system of an automobile, or the like. The statistical copolymer of the present embodiment is capable of increasing mechanical strength, oil resistance, durability fatigue, fuel oil resistance, and alcohol-added gasoline resistance of the boot. Accordingly, it is possible to produce a boot excellent in reliability with respect to non-polar liquid such as oil or grease contained inside, compared to the material of the related art. In addition, the statistical copolymer of the present embodiment is also excellent in settling resistance (low permanent compression set property), and thus, a caulking portion for preventing the leakage of oil contained inside, such as a metal band, is less likely to be deformed.

(Rubber-Coated Cloth)

A rubber-coated cloth is a composite material of rubber and a woven fabric (fiber) in which rubber is bonded to a fabric, and specifically, is widely used in the material of a rubber raft or a tent, clothes such as a rain coat, an architectural waterproof sheet, a buffer material, or the like. The statistical copolymer of the present embodiment is capable of increasing mechanical strength, oil resistance, fuel oil resistance, and alcohol-added gasoline resistance of the rubber-coated cloth. Accordingly, it is possible to produce a rubber-coated cloth capable of withstanding the use in an environment in which oil is scattered, which was difficult with the material of the related art.

(Sponge Product)

A sponge is a porous substance in which countless fine pores are formed inside, and specifically, is a vibration-proofing member, a sponge seal part, a wet suit, shoes, and the like. The statistical copolymer of the present embodiment is capable of increasing mechanical strength, oil resistance, fuel oil resistance, and alcohol-added gasoline resistance of the sponge product. Accordingly, it is possible to produce a sponge product that is less likely to be swollen, deformed, and discolored due to oil, which was difficult with the material of the related art.

(Rubber Lining)

A rubber lining is used for corrosion-proofing of a metal by attaching a rubber sheet to a metal surface of piping, a tank, or the like. In addition, the rubber lining is also used in a portion in which electricity resistance, abrasion resistance, and heat resistance are necessary. The statistical copolymer of the present embodiment is capable of increasing oil resistance, fuel oil resistance, and alcohol-added gasoline resistance as the rubber lining. Accordingly, it is possible to perform the corrosion-proofing of the piping or the tank with oil, which was difficult with the material of the related art.

<Production Method for Statistical Copolymer Latex>

A production method for a statistical copolymer latex of the present embodiment is a method including a polymerization step of performing emulsion polymerization of chloroprene monomer and an unsaturated nitrile monomer, in a specific condition.

In the polymerization step, 95 parts by mass to 45 parts by mass of chloroprene monomer and 5 parts by mass to 55 parts by mass of an unsaturated nitrile monomer (here, a total of the chloroprene monomer and the unsaturated nitrile monomer is set to 100 parts by mass) are used as a total charged amount from the initiation to the termination of the polymerization. By setting a used amount of unsaturated nitrile to be in such a range, it is possible to improve oil resistance and mechanical strength of the statistical copolymer obtained by drying the statistical copolymer latex.

In addition, the polymerization step has the characteristic that, a chain transfer agent is not used, or a used amount of alkyl xanthogen disulfide as a chain transfer agent is suppressed to be less than or equal to 0.4 parts by mass, and is more preferably suppressed to be less than or equal to 0.2 parts by mass, with respect to 100 parts by mass of the total charged amount from the initiation to the termination of the polymerization of the chloroprene monomer and the unsaturated nitrile monomer. The present embodiment has the characteristic that, by reducing the amount of the chain transfer agent to be less than a general amount, a gel structure of a polymer is intentionally developed.

As described above, in the technology of the dry rubber of the related art, it is difficult to perform processing in a case where there are many gel structures, and thus, it has been a common sense to perform adjustment with the amount of a chain transfer agent and a polymerization rate such that the gel structure is not developed, but the present invention has succeeded in intentionally developing the gel structure and in improving fuel oil resistance and alcohol-added gasoline resistance of the statistical copolymer obtained by drying the statistical copolymer latex, by changing the idea and by intentionally reducing the amount of the chain transfer agent to be less than a general amount.

Unless the effect of this technology is impaired, as alkyl xanthogen disulfide that can be used in the production method of the present embodiment, one type or two or more types of known alkyl xanthogen disulfides can be freely selected and used. Examples thereof include dimethyl xanthogen disulfide, diethyl xanthogen disulfide, diisopropyl xanthogen disulfide, and dibutyl xanthogen disulfide.

A polymerization temperature in the polymerization step of the production method of the present embodiment is 30°C to 45°C, and is preferably 35°C to 45°C. By progressing the emulsion polymerization progresses in such a temperature range, it is possible to improve mechanical strength of the statistical copolymer obtained by drying the statistical copolymer latex.

In addition, a polymerization rate in the polymerization step of the production method of the present embodiment is 60% to 100%, and is preferably 70% to 95%. By setting to be in such a range, it is possible to develop the gel structure and to improve fuel oil resistance and alcohol-added gasoline resistance of the statistical copolymer to be obtained.

In the production method of the present embodiment, one type or two or more types of other monomers can be contained in the chloroprene monomer or the unsaturated nitrile monomer to be used Unless the effect of the present invention is impaired, the monomer that can be used in the present embodiment is not particularly limited, and examples thereof include a methyl methacrylate, an ethyl methacrylate, a propyl methacrylate (all isomers), a butyl methacrylate (all isomers), a 2-ethyl hexyl methacrylate, an isobornyl methacrylate, methacrylic acid, a benzyl methacrylate, an acrylate, an ethyl acrylate, a propyl acrylate (all isomers), a butyl acrylate (all isomers), a 2-ethyl hexyl acrylate, an isobornyl acrylate, acrylic acid, a benzyl acrylate, a phenyl acrylate, styrene, and a glycidyl methacrylate, a 2-hydroxyethyl methacrylate, a hydroxypropyl methacrylate (all isomers), a hydroxybutyl methacrylate (all isomers), an N,N-dimethyl aminoethyl methacrylate, an N,N-diethyl aminoethyl methacrylate, a triethylene glycol methacrylate, itaconic acid anhydride, itaconic acid, a glycidyl acrylate, a 2-hydroxyethyl acrylate, a hydroxypropyl acrylate (all isomers), a hydroxybutyl acrylate (all isomers), an N,N-dimethyl aminoethyl acrylate, an N,N-ethyl aminoethyl acrylate, a triethylene glycol acrylate, methacrylamide, N-methyl acrylamide, N,N-dimethyl acrylamide, N-tertiary butyl methacrylamide, N-n-butyl methacrylamide, N-methylol methacrylamide, N-ethylol methacrylamide, N-tertiary butyl acrylamide, N-n-butyl acrylamide, N-methylol acrylamide, N-ethylol acrylamide, vinyl benzoic acid (all isomers), diethyl aminostyrene (all isomers), an alpha-ethyl vinyl benzoic acid (all isomers), diethyl aminoalpha-methyl styrene (all isomers), a p-vinyl benzene sulfonic acid, a p-vinyl benzene sulfone sodium salt, a trimethoxysilyl propyl methacrylate, a triethoxysilyl propyl methacrylate, a tributoxysilyl propyl methacrylate, a dimethoxymethyl silyl propyl methacrylate, a diethoxymethyl silyl propyl methacrylate, a dibutoxymethyl silyl propyl methacrylate, a diisopropoxymethyl silyl propyl methacrylate, a dimethoxysilyl propyl methacrylate, a diethoxysilyl propyl methacrylate, a dibutoxysilyl propyl methacrylate, a diisopropoxysilyl propyl methacrylate, a trimethoxysilyl propyl acrylate, a triethoxysilyl propyl acrylate, a tributoxysilyl propyl acrylate, a dimethoxymethyl silyl propyl acrylate, a diethoxymethyl silyl propyl acrylate, a dibutoxymethyl silyl propyl acrylate, a diisopropoxymethyl silyl propyl acrylate, a dimethoxysilyl propyl acrylate, a diethoxysilyl propyl acrylate, a dibutoxysilyl propyl acrylate, a diisopropoxysilyl propyl acrylate, vinyl acetate, vinyl butyrate, vinyl benzoate, vinyl chloride, vinyl fluoride, vinyl bromide, maleic anhydride, N-phenyl maleimide, N-butyl maleimide, N-vinyl pyrrolidone, N-vinyl carbazole, butadiene, isoprene, ethylene, and propylene. In this case, unless the effect of the present invention is impaired, the content of the monomer in the chloroprene monomer or the unsaturated nitrile monomer is not also particularly limited, and less than or equal to 20 parts by mass in total may be contained.

Examples of the unsaturated nitrile monomer used in the production method of the present embodiment include acrylonitrile, methacrylonitrile, ethacrylonitrile, and phenyl acrylonitrile, and one type can be independently used, or two or more types can be used by being combined. Among them, acrylonitrile is preferable from the viewpoint of production easiness or oil resistance.

Unless the effect of this technology is impaired, a surfactant (an emulsion/dispersant) that can be used in the present embodiment is not particularly limited, and various surfactants such as an anionic surfactant, a nonionic surfactant, and a cationic surfactant, used in usual emulsion polymerization of chloroprene, can be used. From the viewpoint of the stability of a latex to be obtained, an anionic surfactant is preferable, and examples thereof include a rosinate, an alkyl sulfonate having 8 to 20 carbon atoms, an alkyl sulfate, an alkyl aryl sulfate, a condensate of a sodium naphthalene sulfonic acid and formaldehyde, and a sodium alkyl diphenyl ether disulfonic acid. Among the anionic surfactants, it is particularly preferable to use an alkali metal rosinate from the reason that the stability of the latex is particularly excellent. The rosinate is a mixture of a resin acid, a fatty acid, and the like. Abietic acid, neoabietic acid, palustric acid, pimaric acid, isopimaric acid, dehydroabietic acid, dihydropimaric acid, dihydroisopimaric acid, secodehydroabietic acid, dihydroabietic acid, or the like are included as the resin acid, and oleic acid, linoleic acid, or the like are included as the fatty acid. A component composition thereof is changed in accordance with a difference in rosin extraction methods sorted into gum rosin, wood rosin, and tall rosin, a production area of pine trees and a tree species, distillation purification, and a disproportionation reaction, and is not limited in the present invention. In consideration of emulsion stability or handleability, it is preferable to use a sodium salt or a potassium salt.

An added amount of the surfactant is preferably 0.2 parts by mass to 20 parts by mass, and is more preferably 2 parts by mass to 10 parts by mass, with respect to 100 parts by mass of the total charged amount from the initiation to the termination of the polymerization of the chloroprene monomer and the unsaturated nitrile monomer. By setting to be greater than or equal to 0.2 parts by mass, it is possible to sufficiently emulsify a monomer, and by setting to be less than or equal to 20 parts by mass, it is possible to prevent the surfactant from blooming on the surface of a film to be obtained.

Unless the effect of this technology is impaired, one type or two or more types of known polymerization initiators can be freely used as a polymerization initiator that can be used in the present embodiment. Examples thereof include an organic peroxide such as potassium peroxodisulfate, ammonium persulfate, benzoyl peroxide, sodium persulfate, hydrogen peroxide, t-butyl peroxyacetate, t-butyl peroxybenzoate, t-butyl peroxyoctoate, t-butyl peroxyneodecanoate, t-butyl peroxyisobutyrate, t-amyl peroxypivalate, t-butyl peroxypivalate, di-isopropyl peroxydicarbonate, dicyclohexyl peroxydicarbonate, dicumyl peroxide, dibenzoyl peroxide, dilauroyl peroxide, potassium peroxydisulfate, ammonium peroxodisulfate, di-t-butyl nitrite, and dicumyl nitrite, and azo-based initiator such as 2,2-azobis(isobutyronitrile), 2,2'-azobis(2-cyano-2-butane), dimethyl 2,2'-azobisdimethyl isobutyrate, 4,4'-azobis(4-cyanopentanoic acid), 1,1'-azobis(cyclohexane carbonitrile), 2-(t-butyl azo)-2-cyanopropane, 2,2'-azobis[2-methyl-N-(1,1)-bis(hydroxymethyl)-2-hydroxyethyl] propionamide, 2,2'-azobis[2-methyl-N-hydroxyethyl)]-propionamide, 2,2'-azobis(N,N-dimethylene isobutyl amidine) dihydrochloride, 2,2'-azobis(2-amidinopropane) dihydrochloride, 2,2'-azobis(N,N-dimethylene isobutyl amine), 2,2'-azobis(2-methyl-N-[1,1-bis(hydroxymethyl)-2-hydroxyethyl] propionamide), 2,2'-azobis(2-methyl-N-[1,1-bis(hydroxymethyl) ethyl] propionamide, 2,2'-azobis[2-methyl-N-(2-hydroxyethyl) propionamide], 2,2-azobis(isobutyl amide) dihydrate), 2,2'-azobis(2,2,4-trimethyl pentane), and 2,2'-azobis(2-methylpropane).

In the emulsion polymerization, a polymerization promoter can also be used Unless the effect of the present invention is impaired, the polymerization promoter that can be used in the present embodiment is not particularly limited, and one type or two or more types of known polymerization promoters can be freely used. Examples thereof include L-ascorbic acid, tartaric acid, sodium hydrogen sulfite, zinc- or sodium-formaldehyde-sulfoxylate rongalite, a formdiamine sulfinic acid, glucose, formalin, anthraquinone β-sulfonic acid sodium, ferrous sulfate, copper sulfate, sodium bisulfite, and thiourea.

In the polymerization step, it is preferable that the chloroprene monomer is subjected to continuous addition or is subjected to intermittent divided addition 10 times or more, after the initiation of a polymerization reaction. Chloroprene has a reaction speed faster than that of unsaturated nitrile. For this reason, in a polymerization system, the chloroprene monomer is consumed faster than the unsaturated nitrile monomer. In a case where there is a large bias in the ratio of the chloroprene monomer and the unsaturated nitrile monomer, oil resistance of the statistical copolymer to be generated may decrease. In the production method of the present embodiment, when the chloroprene monomer of which the ratio is reduced by the polymerization reaction is mainly added by the continuous addition or the intermittent divided addition of 10 times or more, it is possible to constantly keep the ratio of the chloroprene monomer and the unsaturated nitrile monomer in the polymerization system Accordingly, a statistical copolymer of which oil resistance is improved compared to that of the related art can be obtained In addition, the statistical copolymer that is produced by the production method of the present embodiment is also excellent in mechanical strength.

In the production method of the present embodiment, in a case where the intermittent divided addition is performed 10 times or more, it is preferable that an added amount per one time of the chloroprene monomer that is added after the initiation of the polymerization reaction is less than or equal to 10 parts by mass with respect to 100 parts by mass of the total of the chloroprene monomer and the unsaturated nitrile monomer. In the case of the intermittent divided addition, it is preferable that an addition speed is less than or equal to 2 parts by mass/minute. By setting to be in such a range, a statistical copolymer excellent in oil resistance and mechanical strength can be obtained Here, keeping a ratio of an unreacted chloroprene monomer and an unreacted unsaturated nitrile monomer in a polymerization liquid constant, during the polymerization, indicates that a mass ratio of the unsaturated nitrile monomer with respect to the total of the chloroprene monomer and the unsaturated nitrile monomer is preferably within ±10% of a target value. For example, a case where the mass ratio of the unsaturated nitrile monomer with respect to the total of the chloroprene monomer and the unreacted unsaturated nitrile monomer in the polymerization liquid is kept to 0.50, during the polymerization, indicates that the mass ratio is preferably kept to a range of 0.45 to 0.55.

Unless the effect of the present invention is impaired, a polymerization inhibitor that can be used in the present embodiment is not particularly limited, and one type or two or more types of known polymerization inhibitors can be freely used Examples thereof include thiodiphenyl amine, 4-tert-butyl catechol, 2,2-methylene bis-4-methyl-6-tertiay-butylphenol, and diethyl hydroxyl amine.

In the production method of the present embodiment, the unreacted monomer may be removed and condensed by a known method such as heating under reduced pressure.

In addition, a freezing stabilizer, an emulsion stabilizer, a viscosity modifier, an oxidant inhibitor, an antiseptic agent, or the like can be arbitrarily added to the statistical copolymer latex that is obtained by the production method of the present embodiment, after the polymerization, within a range not impairing the effect of the present invention.

## Examples

Hereinafter, the present invention will be described in more detail, on the basis of examples. Note that, the following examples are an example of representative examples of the present invention, and the present invention is not limited to the following examples. In addition, unless otherwise noted, a room temperature indicates 23°C.

<Production of Statistical Copolymer Latex>

[Example 1]

20 parts by mass of chloroprene monomer, 20 parts by mass of acrylonitrile monomer, 150 parts by mass of pure water, 5.0 parts by mass of disproportional potassium rosinate (manufactured by Harima Chemicals Group, Inc.), 0.4 parts by mass of sodium hydroxide, and 1.0 parts by mass of a sodium salt of a β naphthalene sulfonic acid formalin condensate (manufactured by Kao Corporation) were added to a polymerization vessel having an inner volume of 3 liters, in which a heating-cooling jacket and a stirrer were provided. 0.1 parts by mass of potassium peroxodisulfate as a polymerization initiator was added, and emulsion polymerization was performed at a polymerization temperature of 40°C in a nitrogen stream Divided addition of the chloroprene monomer was performed 12 times in total by adding 5 parts by mass each when specific weight reached 0.989, 0.993, 1.000, 1.007, 1.013, 1.020, 1.026, 1.032, 1.038, 1.042, 1.046, and 1.050. The polymerization was terminated by adding phenothiazine that is a polymerization terminator, at a time point when a polymerization rate with respect to a total of the chloroprene monomer and the acrylonitrile monomer was 82%. Then, an unreacted monomer in a reaction solution was removed and condensed under reduced pressure, and thus, a solid content of a chloroprene-acrylonitrile statistical copolymer latex was adjusted to 50 mass%.

Note that, a polymerization liquid was periodically sampled 10 times or more during the polymerization, and an unreacted chloroprene monomer and an unreacted acrylonitrile monomer contained in the polymerization liquid were measured, and thus, a mass ratio of acrylonitrile with respect to the chloroprene monomer was constantly within ±10% of a target value.

<Measurement of Amount of Monomers in Polymerization Liquid>

A sample obtained by weighing 1.0 g of the sampled polymerization liquid in a volumetric flask of 25 ml, by diluting this polymerization liquid with tetrahydrofuran to 25 ml, and by performing stirring was used and the measurement was performed by a usual quantitative analysis method using a gas chromatograph and a standard curve (the same hereinafter).

(Measurement Condition of Gas Chromatograph)

The gas chromatograph was implemented in the following measurement condition.

- Device: GC-2010 (manufactured by Shimadzu Corporation)
- Used Column: DB-1, 0.25 mm × 60 m
- Carrier Gas: Helium
- Column Temperature: Temperature Rising from 50°C to 100°C at 5°C/Minute
- Inlet Temperature: 270°C
- Detector: FID
- Detector Temperature: 300°C
- Injected Amount: 1 μl

Note that, a polymerization rate from the initiation to a certain time in the polymerization of a chloroprene-acrylonitrile statistical copolymer was calculated from dry weight (a solid content concentration) by drying the chloroprene-acrylonitrile statistical copolymer latex with hot air. Specifically, the calculation was performed by the general expression (II) described below. The solid content concentration during the polymerization was obtained by adding a small amount of polymerization inhibitor, not affecting the solid content concentration, to the latex. In the expression, the solid content concentration is the concentration (mass%) of a solid content obtained by heating 2 g of a sampled emulsion polymerization liquid at 130°C to remove a solvent (water), volatile chemicals, and a raw material, and then, by subtracting a volatile content from a weight change before and after heating. The total charged amount and the residue on evaporation were calculated by a polymerization formulation. The total charged amount is a total amount of the raw material, the reagent, and the solvent (water) charged in the polymerization vessel from the initiation of the polymerization to a certain time. The residue on evaporation indicates the weight of the chemicals remaining as the solid content along with a polymer that is not volatilized in a condition of 130°C, in the chemicals or the raw material charged from the initiation of the polymerization to a certain time. A charged amount of the monomers is a total amount of the monomer initially charged in the polymerization vessel and the monomer subjected to the divided addition from the initiation polymerization to a certain time. Note that, here, the monomer is a total amount of the chloroprene monomer and the acrylonitrile monomer.

$$\text{Polymerization Rate } [\%] = \{(\text{Total Charged Amount } [g] \times \text{Solid Content Concentration } [\text{Mass}\%]/100) - (\text{Residue } [g] \text{ on Evaporation})\}/\text{Charged Amount} [g] \text{ of Monomer} \times 100 \dots \text{(II)}$$

[Example 2]

15 parts by mass of chloroprene monomer, 35 parts by mass of acrylonitrile monomer, 200 parts by mass of pure water, 5.0 parts by mass of disproportional potassium rosinate (manufactured by Harima Chemicals Group, Inc.), 0.4 parts by mass of potassium hydroxide, and 1.0 parts by mass of a sodium salt of a β naphthalene sulfonic acid formalin condensate (manufactured by Kao Corporation) were added to a polymerization vessel having an inner volume of 3 liters, in which a heating-cooling jacket and a stirrer were provided. 0.1 parts by mass of potassium peroxodisulfate as a polymerization initiator was added, and emulsion polymerization was performed at a polymerization temperature of 40°C in a nitrogen stream Divided addition of the chloroprene monomer was performed 12 times in total by adding 5.0 parts by mass each when specific weight reached 0.981, 0.987, 0.992, 0.997, 1.002, 1.007, 1.012, 1.017, 1.022, 1.027, 1.032, and 1.037. The polymerization was terminated by adding phenothiazine that is a polymerization terminator, at a time point when a polymerization rate with respect to a total of the chloroprene monomer and the acrylonitrile monomer was 80%. Then, an unreacted monomer in a reaction solution was removed and condensed under reduced pressure, and thus, a solid content of a chloroprene-acrylonitrile statistical copolymer latex was adjusted to 50 mass%.

Note that, a polymerization liquid was periodically sampled 10 times or more during the polymerization, and an unreacted chloroprene monomer and an unreacted acrylonitrile monomer contained in the polymerization liquid were measured, and thus, a mass ratio of the unsaturated nitrile monomer with respect to the chloroprene monomer was constantly within ±10% of a target value.

[Examples 3 to 6]

A chloroprene-acrylonitrile statistical copolymer latex was obtained by the same method as that in Example 1, except that each formulation was changed as shown in Table 1 described below. Note that, a polymerization liquid was periodically sampled 10 times or more during the polymerization, and an unreacted chloroprene monomer and an unreacted acrylonitrile monomer contained in the polymerization liquid were measured, and thus, a mass ratio of acrylonitrile monomer with respect to a total amount of the chloroprene monomer and the acrylonitrile monomer was constantly within ±10% of a target value.

[Comparative Example 1]

100 parts by mass of chloroprene monomer, 150 parts by mass of pure water, 5.0 parts by mass of disproportional potassium rosinate (manufactured by Harima Chemicals Group, Inc.), 0.4 parts by mass of potassium hydroxide, and 1.0 parts by mass of a sodium salt of a β naphthalene sulfonic acid formalin condensate (manufactured by Kao Corporation) were added to a polymerization vessel having an inner volume of 3 liters, in which a heating-cooling jacket and a stirrer were provided. 0.1 parts by mass of potassium peroxodisulfate as a polymerization initiator was added, and emulsion polymerization was performed at a polymerization temperature of 40°C in a nitrogen stream The polymerization was terminated by adding phenothiazine that is a polymerization terminator, at a time point when a polymerization rate with respect to the chloroprene monomer was 80%. Then, an unreacted monomer in a reaction solution was removed and condensed under reduced pressure, and thus, a solid content of a chloroprene-acrylonitrile statistical copolymer latex was adjusted to 50 mass%.

[Comparative Examples 2 and 3]

A chloroprene-acrylonitrile statistical copolymer latex was obtained by the same method as that in Example 1, except that each formulation was changed as shown in Table 2 described below.

[Comparative Example 4]

A commercially available H-NBR latex (Zetpol2230LX, manufactured by Zeon Corporation) was used.

<Measurement of Content of Unsaturated Nitrile (Acrylonitrile)>

By using 100 mg of a statistical copolymer obtained by freezing 12 g of the statistical copolymer latex produced as described above at -30°C for 3 hours or longer, and then, by drying with a vacuum drier at a room temperature of 23°C for 16 hours or longer, the determination was performed with the content of nitrogen atoms measured by an elemental analysis device (SUMIGRAPH 220F: manufactured by Sumika Chemical Analysis Service, Ltd.). At this time, a small error due to the nitrogen atoms in a polymerization inhibitor and an antioxidant was ignored. As the temperature of an electric furnace, a reaction furnace was set to 900°C, a reduction furnace was set to 600°C, a column temperature was set to 70°C, a detector temperature was set to 100°C, oxygen flowed at 0.2 ml/min as combustion gas, and helium flowed at 80 ml/min as carrier gas. A standard curve was prepared by using an asparagic acid (10.52%), in which the content of nitrogen was known, as a standard substance.

<Measurement of Concentration of Ammonia>

Approximately 1 ml of the statistical copolymer latex produced as described above was dropped in a screw-top bottle from which 5 ml of methanol was collected, and was weighed. Such a solution was stirred and was left to stand, and then, a supernatant solution was collected, and dilution was performed 10 times with pure water. This diluted solution was measured by a capillary electrophoresis device, and thus, the concentration of ammonia was determined.

(Measurement Condition of Capillary Electrophoresis)

Capillary electrophoresis was implemented in the following measurement condition.

- Device: CAPI-3300 (manufactured by Otsuka Electronics Co., Ltd.)
- Capillary Pipe: 75 $\mu$m $\times$ 50 cm
- Sample Injection Mode: Height difference 25 mm
  Time: 50 Seconds

  Migration Mode: Low Voltage 15 kV
  Time: 8 Minutes
  Wavelength 210 nm

<Measurement of Toluene-Insoluble Fraction>

0.75 g of a statistical copolymer obtained by freezing 12 g of the statistical copolymer latex produced as described above at -30°C for 3 hours or longer, and then, by drying with a vacuum drier at a room temperature of 23°C for 16 hours or longer was cut into 2 mm squares, was put in a conical beaker along with 123 g of toluene, and was dissolved at a room temperature of 23°C for 16 hours while being stirred with a magnetic stirrer at approximately 1 time/second. After that, a gel content was separated by using a wire mesh of 200 meshes, and weight after drying at 110°C for 60 minutes was measured, and thus, a toluene-insoluble fraction was calculated.

<Preparation of Film>

The statistical copolymer latex was poured into a horizontal stainless steel vat while being filtered such that a thickness after drying was approximately 1.1 mm, and was dried at a room temperature for 3 days. After that, hot press was performed at 140°C for 15 minutes such that the thickness was approximately 1.0 mm, and thus, a film was prepared.

<Preparation of RFL Film>

11 g of resorcine (manufactured by Wako Pure Chemical Industries, Ltd), 16 g of an aqueous solution of formaldehyde of 37 mass% (manufactured by Wako Pure Chemical Industries, Ltd.), 3.0 g of an aqueous solution of NaOH of 10%, and 250 g of pure water were mixed, and were left to stand at a room temperature for 20 hours, and then, were further left to stand at a room temperature for 24 hours after adding a mixed liquid of 100 g of pure water, 200 g of the statistical copolymer latex, and 5.0 g of an aqueous solution of NaOH of 10% thereto. Such a mixture was poured into a horizontal glass plate such that a thickness after drying was approximately 0.2 mm, and was dried at a room temperature for 3 days, and thus, an RFL film was prepared.

<Evaluation of Alcohol-Added Gasoline Resistance>

With respect to the film and the RFL film prepared as described above, a value of a volume change rate ($\Delta V$) and a value of a weight change rate ($\Delta W$) that were measured on the basis of JIS K6258 after dipping the films in alcohol-added gasoline (a solution of Isooctane/Toluene/Ethanol = 4/4/2) at 23°C for 72 hours were measured.

<Evaluation of Engine Oil Resistance>

With respect to the film and the RFL film prepared as described above, a value of a volume change rate ($\Delta V$) and a value of a weight change rate ($\Delta W$) that were measured on the basis of JIS K6258 after dipping the films in engine oil (10W-30) at 140°C for 72 hours were measured.

<Results>

The results of Examples 1 to 6 are shown in Table 1 described below, and the results of Comparative Examples 1 to 4 are shown in Table 2 described below.

[Table 1]

| | | Example | | | | | |
|---|---|---|---|---|---|---|---|
| | | 1 | 2 | 3 | 4 | 5 | 6 |
| Polymerization formulation | | | | | | | |
| Chloroprene monomer (initial) | Parts by mass | 20 | 15 | 20 | 20 | 20 | 20 |
| Acrylonitrile monomer | Parts by mass | 20 | 35 | 20 | 20 | 20 | 20 |
| Diethyl xanthogen disulfide | Parts by mass | - | - | 0.1 | 0.3 | 0.3 | - |
| Pure water | Parts by mass | 150 | 200 | 150 | 150 | 150 | 150 |
| Disproportional potassium rosinate | Parts by mass | 5.0 | 5.0 | 5.0 | 5.0 | 5.0 | 5.0 |
| Potassium hydroxide | Parts by mass | 0.4 | 0.4 | 0.4 | 0.4 | 0.4 | 0.8 |
| Sodium salt of $\beta$-naphthalene sulfonic acid formalin condensate | Parts by mass | 1.0 | 1.0 | 1.0 | 1.0 | 1.0 | 1.0 |
| Polymerization rate | % | 82 | 80 | 81 | 82 | 65 | 80 |
| Number of times of intermittent divided addition of chloroprene monomer | | 12 times | 12 times | 12 times | 12 times | 12 times | 12 times |
| pH | | 10.8 | 10.9 | 10.8 | 10.7 | 10.8 | 11.8 |
| Content of acrylonitrile | Mass% | 8.4 | 15.3 | 8.2 | 8.2 | 8.3 | 8.2 |
| Concentration of ammonia | ppm | 0.0 | 2.0 | 1.0 | 0.0 | 1.0 | 33.0 |
| Toluene-insoluble fraction | Mass% | 88 | 90 | 81 | 72 | 61 | 90 |
| Film | | | | | | | |
| Film thickness | mm | 0.9 | 0.9 | 1.0 | 0.9 | 0.9 | 0.9 |
| Alcohol-added gasoline resistance (24°C × 72 hours) | | | | | | | |
| Volume change rate ($\Delta$V) | % | 47.4 | 36.9 | 48.0 | 51.8 | 53.8 | 42.6 |
| Weight change rate ($\Delta$W) | % | 28.9 | 20.8 | 34.2 | 35.9 | 42.0 | 30.3 |
| Engine oil resistance (140°C × 72 hours) | | | | | | | |
| Volume change rate ($\Delta$V) | % | -1.5 | 0.8 | -0.8 | 1.1 | 1.3 | -0.7 |
| Weight change rate ($\Delta$W) | % | -2.4 | 1.0 | -0.6 | 0.7 | 0.8 | -0.9 |
| RFL film | | | | | | | |
| Film thickness (mm) | mm | 0.2 | 0.2 | 0.2 | 0.2 | 0.2 | 0.2 |

(continued)

| | | | Example | | | | | |
|---|---|---|---|---|---|---|---|---|
| | | | 1 | 2 | 3 | 4 | 5 | 6 |
| Alcohol-added gasoline resistance (24°C × 72 hours) | | | | | | | | |
| | Volume change rate (ΔV) | % | 7.7 | 4.4 | 7.8 | 8.2 | 11.0 | 6.8 |
| | Weight change rate (ΔW) | % | 2.6 | -1.6 | 4.2 | 5.8 | 9.6 | 3.4 |
| Engine oil resistance (140°C × 72 hours) | | | | | | | | |
| | Volume change rate (ΔV) | % | 0.7 | 0.3 | 0.8 | 0.8 | 1.1 | 0.9 |
| | Weight change rate (ΔW) | % | 0.3 | 0.5 | 1.0 | 0.7 | 0.5 | 0.6 |

[Table 2]

| | | Comparative Example | | | |
|---|---|---|---|---|---|
| | | 1 | 2 | 3 | 4 |
| Polymerization formulation | | | | | |
| Chloroprene monomer (initial) | Parts by mass | 100 | 20 | 20 | |
| Acrylonitrile monomer | Parts by mass | - | 20 | 20 | |
| Diethyl xanthogen disulfide | Parts by mass | - | 2.0 | 2.0 | |
| Pure water | Parts by mass | 150 | 150 | 150 | |
| Disproportional potassium rosinate | Parts by mass | 5.0 | 5.0 | 5.0 | |
| Potassium hydroxide | Parts by mass | 0.4 | 0.4 | 0.4 | Commercially available H-NBR latex |
| Sodium salt of β-naphthalene sulfonic acid formalin condensate | Parts by mass | 1.0 | 1.0 | 1.0 | |
| Polymerization rate | % | 80 | 80 | 85 | |
| Number of times of intermittent divided addition of chloroprene monomer | | None | 12 times | 12 times | |
| pH | | 10.8 | 10.7 | 10.8 | |
| Content of acrylonitrile | Mass% | 0.0 | 8.2 | 8.2 | |
| Concentration of ammonia | ppm | 0.0 | 0.0 | 0.0 | |
| Toluene-insoluble fraction | Mass% | 88 | 5 | 41 | |
| Film | | | | | |

(continued)

| | | Comparative Example | | | |
|---|---|---|---|---|---|
| | | 1 | 2 | 3 | 4 |
| Film thickness | mm | 0.9 | 1.0 | 1.0 | 1.0 |
| Alcohol-added gasoline resistance (24°C × 72 hours) | | | | | |
| Volume change rate (ΔV) | | 44.8 | Partially dissolved | 81.0 | Partially dissolved |
| Weight change rate (ΔW) | | 26.6 | Partially dissolved | 77.0 | Partially dissolved |
| Engine oil resistance (140°C × 72 hours) | | | | | |
| Volume change rate (ΔV) | | 27.4 | 0.2 | 2.4 | 3.6 |
| Weight change rate (ΔW) | | 19.9 | -0.5 | 3.0 | 4.6 |
| RFL film | | | | | |
| Film thickness (mm) | mm | 0.2 | 0.2 | 0.2 | 0.2 |
| Alcohol-added gasoline resistance (24°C × 72 hours) | | | | | |
| Volume change rate (ΔV) | | 1 | Partially dissolved | Slightly dissolved | Slightly dissolved |
| Weight change rate (ΔW) | | -4 | Partially dissolved | Slightly dissolved | Slightly dissolved |
| Engine oil resistance (140°C × 72 hours) | | | | | |
| Volume change rate (ΔV) | | 25.8 | 6.6 | 0.2 | 2.9 |
| Weight change rate (ΔW) | | 21.3 | 7.5 | 0.4 | 5.6 |

<Discussion>

In Comparative Examples 2 and 3 in which greater than 0.4 parts by mass of the alkyl xanthogen disulfide was used and the toluene-insoluble fraction was less than 50 mass%, the results showed dissolution in alcohol-added gasoline.

In contrast, in Examples 1 to 6 in which a range of 0.0 parts by mass to 0.4 parts by mass of the alkyl xanthogen disulfide was used and the toluene-insoluble fraction was in a range of 50 mass% to 100 mass%, it was found that both alcohol-added gasoline resistance and engine oil resistance were excellent.

Comparing in the examples, in Example 6 in which pH was greater than 11.5, the concentration of ammonia was higher than that of Example 1 in which pH was in a range of 6.0 to 11.5. From such a result, it was found that the concentration of ammonia was able to be reduced by setting the pH to be in the range of 6.0 to 11.5.

**Claims**

1. A statistical copolymer latex, comprising:

   a chloroprene monomeric unit and an unsaturated nitrile monomeric unit in which a content of the unsaturated nitrile monomeric unit is 5 mass% to 20 mass%,
   wherein a toluene-insoluble fraction of a statistical copolymer obtained by lyophilization of the statistical copolymer latex is 50 mass% to 100 mass% with respect to 100 mass% of the statistical copolymer.

2. The statistical copolymer latex according to claim 1,

wherein the toluene-insoluble fraction is 75 mass % to 95 mass % with respect to 100 mass % of the statistical copolymer.

3. The statistical copolymer latex according to claim 1 or 2,
wherein a value of a volume change rate (ΔV) and a value of a weight change rate (ΔW) that are measured on the basis of JIS K6258 after dipping a statistical copolymer obtained by drying the statistical copolymer latex at a room temperature in alcohol-added gasoline (a solution of Isooctane/Toluene/Ethanol = 4/4/2) at 23°C for 72 hours are in a range of - 10% to +60%.

4. The statistical copolymer latex according to any one of claims 1 to 3,
wherein a value of a volume change rate (ΔV) and a value of a weight change rate (ΔW) that are measured on the basis of JIS K6258 after dipping an RFL film obtained by drying an RFL adhesive agent of Resorcine (R)/Formalin (F)/Latex (L) = 10/5/85 (a mass ratio) using the statistical copolymer latex at a room temperature in alcohol-added gasoline (a solution of Isooctane/Toluene/Ethanol = 4/4/2) at 23°C for 72 hours are in a range of -10% to +20%.

5. The statistical copolymer latex according to any one of claims 1 to 4,
wherein a value of a volume change rate (ΔV) and a value of a weight change rate (ΔW) that are measured on the basis of JIS K6258 after dipping a statistical copolymer obtained by drying the statistical copolymer latex at a room temperature in engine oil at 140°C for 72 hours are in a range of -10% to +10%.

6. The statistical copolymer latex according to any one of claims 1 to 5,
wherein a value of a volume change rate (ΔV) and a value of a weight change rate (ΔW) that are measured on the basis of JIS K6258 after dipping an RFL film obtained by drying an RFL adhesive agent of Resorcine (R)/Formalin (F)/Latex (L) = 10/5/85 (a mass ratio) using the statistical copolymer latex at a room temperature in engine oil at 140°C for 72 hours are in a range of -10% to +10%.

7. The statistical copolymer latex according to any one of claims 1 to 6,
wherein a concentration of ammonia contained in the statistical copolymer latex is less than or equal to 20 ppm, and pH is in a range of 6.0 to 11.5.

8. The statistical copolymer latex according to any one of claims 1 to 7,
wherein the statistical copolymer latex is used in an RFL adhesive agent, a dipped product, an adhesive agent, or a film.

9. An RFL adhesive agent, a dipped product, an adhesive agent, or a film using the statistical copolymer latex according to any one of claims 1 to 8.

10. A production method for obtaining the statistical copolymer latex according to any one of claims 1 to 8, the method comprising:
a polymerization step of performing emulsion polymerization until a polymerization rate is 60% to 100% at a polymerization temperature of 30°C to 45°C, by using 95 parts by mass to 45 parts by mass of a chloroprene monomer and 5 parts by mass to 55 parts by mass of an unsaturated nitrile monomer (here, a total of the chloroprene monomer and the unsaturated nitrile monomer is set to 100 parts by mass), and 0.0 parts by mass to 0.4 parts by mass of alkyl xanthogen disulfide, as a total charged amount from initiation to termination of polymerization.

11. The production method for the statistical copolymer latex according to claim 10,
wherein in the polymerization step, the chloroprene monomer is subjected to continuous addition or is subjected to intermittent divided addition 10 times or more, after initiation of a polymerization reaction.

12. A statistical copolymer latex, comprising:

a chloroprene monomeric unit and an unsaturated nitrile monomeric unit in which a content of the unsaturated nitrile monomeric unit is 5 mass% to 20 mass%,
wherein a toluene-insoluble fraction of a statistical copolymer obtained by lyophilization of the statistical copolymer latex is 50 mass% to 100 mass% with respect to 100 mass% of the statistical copolymer, and
the statistical copolymer latex is obtained by a step of performing emulsion polymerization until a polymerization rate is 60% to 100% at a polymerization temperature of 30°C to 45°C, by using 95 parts by mass to 45 parts by mass of a chloroprene monomer and 5 parts by mass to 55 parts by mass of an unsaturated nitrile monomer (here, a total of the chloroprene monomer and the unsaturated nitrile monomer is set to 100 parts by mass), and 0.0 parts by mass to 0.4 parts by mass of alkyl xanthogen disulfide, as a total charged amount from initiation to termination of polymerization.

13. The statistical copolymer latex according to claim 12,
wherein the toluene-insoluble fraction is 75 mass % to 95 mass % with respect to 100 mass % of the statistical copolymer.


**Patentansprüche**

1. Statistischer Copolymerlatex, umfassend:

   eine Chloropren-Monomereinheit und eine ungesättigte Nitril-Monomereinheit, worin ein Gehalt der ungesättigten Nitril-Monomereinheit 5 Massen-% bis 20 Massen-% beträgt,
   wobei eine toluolunlösliche Fraktion eines statistischen Copolymers, erhalten durch Lyophilisation des statistischen Copolymerlatex, 50 Massen-% bis 100 Massen-%, bezogen auf 100 Massen-% des statistischen Copolymers, beträgt.

2. Statistischer Copolymerlatex gemäß Anspruch 1,
   wobei die toluolunlösliche Fraktion 75 Massen-% bis 95 Massen-%, bezogen auf 100 Massen-% des statistischen Copolymers, beträgt.

3. Statistischer Copolymerlatex gemäß Anspruch 1 oder 2,
   wobei ein Wert einer Volumenänderungsrate ($\Delta V$) und ein Wert einer Gewichtsänderungsrate ($\Delta W$), gemessen basierend auf JIS K6258 nach dem Eintauchen eines statistischen Copolymers, erhalten durch Trocknen des statistischen Copolymerlatex bei Raumtemperatur, in mit Alkohol versetztes Benzin (eine Lösung von Isooctan/Toluol/Ethanol = 4/4/2) für 72 Stunden bei 23°C, im Bereich von -10% bis +60% liegen.

4. Statistischer Copolymerlatex gemäß einem der Ansprüche 1 bis 3,
   wobei ein Wert einer Volumenänderungsrate ($\Delta V$) und ein Wert einer Gewichtsänderungsrate ($\Delta W$), gemessen basierend auf JIS K6258 nach dem Eintauchen eines RFL-Films, erhalten durch Trocknen eines RFL-Klebstoffs aus Resorcin (R)/Formalin (F)/Latex (L) = 10/5/85 (ein Massenverhältnis) unter Verwendung des statistischen Copolymerlatex bei Raumtemperaturbei, in mit Alkohol versetztes Benzin (eine Lösung von Isooctan/Toluol/Ethanol = 4/4/2) für 72 Stunden bei 23°C, im Bereich von -10% bis +20% liegen.

5. Statistischer Copolymerlatex gemäß einem der Ansprüche 1 bis 4,
   wobei ein Wert einer Volumenänderungsrate ($\Delta V$) und ein Wert einer Gewichtsänderungsrate ($\Delta W$), gemessen basierend auf JIS K6258 nach dem Eintauchen eines statistischen Copolymers, erhalten durch Trocknen des statistischen Copolymerlatex bei Raumtemperatur, in Motoröl für 72 Stunden bei 140°C, im Bereich von -10% bis +10% liegen.

6. Statistischer Copolymerlatex gemäß einem der Ansprüche 1 bis 5,
   wobei ein Wert einer Volumenänderungsrate ($\Delta V$) und ein Wert einer Gewichtsänderungsrate ($\Delta W$), gemessen basierend auf JIS K6258 nach dem Eintauchen eines RFL-Films, erhalten durch Trocknen eines RFL-Klebstoffs aus Resorcin (R)/Formalin (F)/Latex (L) = 10/5/85 (ein Massenverhältnis) unter Verwendung des statistischen Copolymerlatex bei Raumtemperatur, in Motoröl für 72 Stunden bei 140°C, im Bereich von -10% bis +10% liegen.

7. Statistischer Copolymerlatex gemäß einem der Ansprüche 1 bis 6,
   wobei eine Konzentration von in dem statistischen Copolymerlatex enthaltenen Ammoniak weniger als oder gleich 20 ppm beträgt, und der pH-Wert im Bereich von 6,0 bis 11,5 liegt.

8. Statistischer Copolymerlatex gemäß einem der Ansprüche 1 bis 7,
   wobei der statistische Copolymerlatex in einem RFL-Klebstoff, einem getauchten Produkt, einem Klebstoff oder einem Film verwendet wird.

9. RFL-Klebstoff, getauchtes Produkt, Klebstoff oder Film, verwendend den statistischen Copolymerlatex gemäß einem der Ansprüche 1 bis 8.

**10.** Herstellungsverfahren zum Erhalten des statistischen Copolymerlatex gemäß einem der Ansprüche 1 bis 8, wobei das Verfahren umfasst:
einen Polymerisationsschritt des Durchführens einer Emulsionspolymerisation bis zu einer Polymerisationsrate von 60% bis 100% bei einer Polymerisationstemperatur von 30°C bis 45°C unter Verwendung von 95 Masseteilen bis 45 Masseteilen eines Chloprenmonomers und 5 Masseteilen bis 55 Masseteilen eines ungesättigten Nitrilmonomers (hier wird eine Gesamtmenge des Chloprenmonomers und des ungesättigten Nitrilmonomers auf 100 Masseteile festgelegt) und 0,0 Masseteilen bis 0,4 Masseteilen Alkylxanthogendisulfid als Gesamtbeschickungsmenge vom Beginn bis zum Ende der Polymerisation.

**11.** Verfahren zur Herstellung des statistischen Copolymerlatex gemäß Anspruch 10,
wobei in dem Polymerisationsschritt das Chloprenmonomer kontinuierlich zugegeben wird oder nach Beginn einer Polymerisationsreaktion intermittierend, 10 Mal oder mehr aufgeteilt zugegeben wird.

**12.** Statistischer Copolymerlatex, umfassend:

eine Chloropren-Monomereinheit und eine ungesättigte Nitril-Monomereinheit, worin der Gehalt der ungesättigten Nitril-Monomereinheit 5 Massen-% bis 20 Massen-% beträgt,
wobei eine toluolunlösliche Fraktion eines statistischen Copolymers, erhalten durch Lyophilisation des statistischen Copolymerlatex, 50 Massen-% bis 100 Massen-%, bezogen auf 100 Massen-% des statistischen Copolymers, beträgt, und
der statistische Copolymerlatex durch einen Schritt des Durchführens einer Emulsionspolymerisation bis zu einer Polymerisationsrate von 60% bis 100% bei einer Polymerisationstemperatur von 30°C bis 45°C unter Verwendung von 95 Masseteilen bis 45 Masseteilen eines Chloprenmonomers und 5 Masseteilen bis 55 Masseteilen eines ungesättigten Nitrilmonomers (hier wird eine Gesamtmenge des Chloprenmonomers und des ungesättigten Nitrilmonomers auf 100 Masseteile festgelegt) und 0,0 Masseteilen bis 0,4 Masseteilen Alkylxanthogendisulfid als Gesamtbeschickungsmenge vom Beginn bis zum Ende der Polymerisation erhalten wird.

**13.** Statistischer Copolymerlatex gemäß Anspruch 12,
wobei die toluolunlösliche Fraktion 75 Massen-% bis 95 Massen-%, bezogen auf 100 Massen-% des statistischen Copolymers, beträgt.

## Revendications

**1.** Latex de copolymère statistique, comprenant :

un motif monomère chloroprène et un motif monomère nitrile insaturé dans lequel une teneur en motif monomère nitrile insaturé est de 5 % en masse à 20 % en masse,
dans lequel une fraction insoluble dans le toluène d'un copolymère statistique obtenu par lyophilisation du latex de copolymère statistique est de 50 % en masse à 100 % en masse par rapport à 100 % en masse du copolymère statistique.

**2.** Latex de copolymère statistique selon la revendication 1,
dans lequel la fraction insoluble dans le toluène est de 75 % en masse à 95 % en masse par rapport à 100 % en masse du copolymère statistique.

**3.** Latex de copolymère statistique selon la revendication 1 ou 2,
dans lequel une valeur d'un taux de changement de volume ($\Delta V$) et une valeur d'un taux de changement de poids ($\Delta W$) qui sont mesurées sur la base de JIS K6258 après immersion d'un copolymère statistique obtenu en séchant le latex de copolymère statistique à température ambiante dans une essence additionnée d'alcool (une solution d'isooctane/toluène/éthanol = 4/4/2) à 23°C pendant 72 heures sont dans une plage de -10 % à +60 %.

**4.** Latex de copolymère statistique selon l'une quelconque des revendications 1 à 3,
dans lequel une valeur d'un taux de changement de volume ($\Delta V$) et une valeur d'un taux de changement de poids ($\Delta W$) qui sont mesurées sur la base de JIS K6258 après immersion d'un film RFL obtenu en séchant un agent adhésif RFL de résorcine (R)/formaline (F)/latex (L) = 10/5/85 (un rapport en masse) en utilisant le latex de copolymère statistique à température ambiante dans une essence additionnée d'alcool (une solution d'isooctane/toluène/éthanol = 4/4/2) à 23°C pendant 72 heures sont dans une plage de -10 % à +20 %.

5. Latex de copolymère statistique selon l'une quelconque des revendications 1 à 4,
dans lequel une valeur d'un taux de changement de volume (ΔV) et une valeur d'un taux de changement de poids (ΔW) qui sont mesurées sur la base de JIS K6258 après immersion d'un copolymère statistique obtenu en séchant le latex de copolymère statistique à température ambiante dans une huile moteur à 140 °C pendant 72 heures sont dans une plage de -10 % à +10 %.

6. Latex de copolymère statistique selon l'une quelconque des revendications 1 à 5,
dans lequel une valeur d'un taux de changement de volume (ΔV) et une valeur d'un taux de changement de poids (ΔW) qui sont mesurées sur la base de JIS K6258 après immersion d'un film RFL obtenu en séchant un agent adhésif RFL de résorcine (R)/formaline (F)/latex (L) = 10/5/85 (un rapport en masse) en utilisant le latex de copolymère statistique à température ambiante dans une huile moteur à 140 °C pendant 72 heures sont dans une plage de -10 % à +10 %.

7. Latex de copolymère statistique selon l'une quelconque des revendications 1 à 6,
dans lequel une concentration en ammoniac contenu dans le latex de copolymère statistique est inférieure ou égale à 20 ppm, et le pH est dans une plage de 6,0 à 11,5.

8. Latex de copolymère statistique selon l'une quelconque des revendications 1 à 7,
dans lequel le latex de copolymère statistique est utilisé dans un agent adhésif RFL, un produit trempé, un agent adhésif ou un film.

9. Agent adhésif RFL, produit trempé, agent adhésif ou film utilisant le latex de copolymère statistique selon l'une quelconque des revendications 1 à 8.

10. Procédé de production pour obtenir le latex de copolymère statistique selon l'une quelconque des revendications 1 à 8, le procédé comprenant :
une étape de polymérisation consistant à effectuer une polymérisation en émulsion jusqu'à ce qu'un taux de polymérisation soit de 60 % à 100 % à une température de polymérisation de 30 °C à 45 °C, en utilisant 95 parties en masse à 45 parties en masse d'un monomère de chloroprène et 5 parties en masse à 55 parties en masse d'un monomère de nitrile insaturé (ici, un total du monomère de chloroprène et du monomère de nitrile insaturé est fixé à 100 parties en masse), et 0,0 partie en masse à 0,4 partie en masse d'un disulfure d'alkyle xanthogène, en tant que quantité chargée totale du début à la fin de la polymérisation.

11. Procédé de production du latex de copolymère statistique selon la revendication 10,
dans lequel dans l'étape de polymérisation, le monomère de chloroprène est soumis à un ajout continu ou est soumis à un ajout divisé intermittent en 10 fois ou plus, après le début d'une réaction de polymérisation.

12. Latex de copolymère statistique, comprenant :

un motif monomère chloroprène et un motif monomère nitrile insaturé dans lequel une teneur en motif monomère nitrile insaturé est de 5 % en masse à 20 % en masse,
dans lequel une fraction insoluble dans le toluène d'un copolymère statistique obtenu par lyophilisation du latex de copolymère statistique est de 50 % en masse à 100 % en masse par rapport à 100 % en masse du copolymère statistique, et
le latex de copolymère statistique est obtenu par une étape consistant à effectuer une polymérisation en émulsion jusqu'à ce qu'un taux de polymérisation soit de 60 % à 100 % à une température de polymérisation de 30 °C à 45 °C, en utilisant 95 parties en masse à 45 parties en masse d'un monomère de chloroprène et 5 parties en masse à 55 parties en masse d'un monomère de nitrile insaturé (ici, un total du monomère de chloroprène et du monomère de nitrile insaturé est fixé à 100 parties en masse), et 0,0 partie en masse à 0,4 partie en masse d'un disulfure d'alkyle xanthogène, en tant que quantité chargée totale du début à la fin de la polymérisation.

13. Latex de copolymère statistique selon la revendication 12,
dans lequel la fraction insoluble dans le toluène est de 75 % en masse à 95 % en masse par rapport à 100 % en masse du copolymère statistique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S55145715 A
- JP S48981 A
- JP 2009179687 A
- JP 2009235304 A
- US 2395649 A
- US 3340088 A
- GB 858444 A
- US 3595847 A
- EP 0223149 A

**Non-patent literature cited in the description**

- **J. C. RANDALL.** POLYMER SEQUENCE DETERMINATION, Carbon-13 NMR Method. Academic Press, 1977, 71-78